# EUROPEAN PATENT APPLICATION

(11) **EP 4 778 768 A1**
(43) Date of publication of application: **22.07.2026**
(21) Application number: 26150953.3
(22) Date of filing: 09.01.2026
(51) Int. Cl.: B60L 1/00, B60H 1/00, B60L 1/02, B60L 58/26, B60L 58/27, H01M 10/625

(54) **VEHICLE THERMAL MANAGEMENT SYSTEM AND METHOD**

(30) Priority: 17.01.2025 JP 2025007112
(71) Applicant: MAZDA MOTOR CORPORATION, Hiroshima 730-8670 (JP)
(72) Inventor: Tatsunori, Kiyomihara, Aki-gun, Hiroshima, 730-8670 (JP); Shutaro, Yamada, Aki-gun, Hiroshima, 730-8670 (JP); Yasuhiko, Nakahara, Aki-gun, Hiroshima, 730-8670 (JP)
(74) Representative: Lorenz Seidler Gossel Part. mbB

(57) **Abstract**

To enable efficient charging to be performed on a battery in low-temperature state a thermal management system S is described including a first circuit 100 that includes an electric heater 101 and performs temperature adjustment of a battery B, a second circuit 200 that performs temperature adjustment of a drive device E, and a control unit 600. The control unit 600 determines whether the temperature of the battery B is equal to or lower than a first temperature, executes first heating control that heats a heating medium in the first circuit using the electric heater 101 when it is determined that the temperature of the battery B is equal to or lower than the first temperature, and subsequently, when the temperature of the battery B becomes higher than the first temperature, connects the first circuit 100 and the second circuit 200 and executes second heating control that heats the heating medium using waste heat of the drive device E.

## Description

The present disclosure relates to a vehicle thermal management system that is mounted on, for example, an electric vehicle.

### [Background Art]

In Japanese Patent Laid-Open No. 2011-255879, a thermal management system for an electric vehicle that supplies electric power from a vehicle battery to a driving motor and travels using the motive power of the driving motor is disclosed. In such a vehicle, it is necessary to heat the vehicle battery until the vehicle battery reaches a recommended temperature before the start of charging since it may become impossible to perform charging when the temperature of the vehicle battery is too low.

Japanese Patent Laid-Open No. 2011-255879 discloses heating a vehicle battery using waste heat that is generated by a drive device called a drivetrain component, specifically, a charger.

When the vehicle battery is heated using waste heat of the drive device as in Japanese Patent Laid-Open No. 2011-255879, it is assumed that the drive device is already warm enough to generate waste heat, but it takes time for the temperature of the drive device to rise to such a temperature range in cold condition. Thus, it takes time for the vehicle battery to reach a chargeable temperature state in cold condition, which in turn makes is impossible to perform efficient charging.

The present disclosure has been made in view of such a point, and an object thereof is to enable efficient charging to be performed on a battery in a low-temperature state.

In order to achieve the object described above, in an aspect of the present disclosure, a vehicle thermal management system mounted on a vehicle that travels by supplying electric power of a battery to a drive device can be assumed. The vehicle thermal management system includes: a first circuit that is configured to allow a heating medium to flow therethrough and includes an electric heater that heats the heating medium, the first circuit performing temperature adjustment of the battery using the heating medium flowing therethrough; a second circuit that is configured to allow the heating medium to flow therethrough and performs temperature adjustment of the drive device using the heating medium flowing therethrough; a battery temperature sensor that obtains a temperature of the battery; and a control unit that determines whether the temperature of the battery obtained by the battery temperature sensor is equal to or lower than a first temperature, executes first heating control that heats the heating medium in the first circuit using the electric heater when it is determined that the temperature of the battery obtained by the battery temperature sensor is equal to or lower than the first temperature, and subsequently, when the temperature of the battery obtained by the battery temperature sensor becomes higher than the first temperature, connects the first circuit and the second circuit and executes second heating control that heats the heating medium using waste heat of the drive device.

According to this configuration, when the temperature of the battery is too low and unsuitable for charging, the control unit executes the first heating control and the heating medium in the first circuit is heated by the electric heater. The battery is heated by the heating medium in the first circuit heated by the electric heater. By heating the heating medium in the first circuit using the electric heater, the temperature of the battery can be increased early. As the temperature of the battery rises, the control unit executes the second heating control, and connects the first circuit and the second circuit to circulate the heating medium. At this time, waste heat dissipated from the drive device is absorbed by the heating medium, the battery is heated by the heating medium that has thus risen in temperature, and the heat can be stored in the battery, which enables the waste heat of the drive device to be effectively used.

The vehicle thermal management system may further includes: a refrigerant circuit including a compressor that compresses a refrigerant, an outdoor condenser into which the refrigerant compressed by the compressor flows, and a chiller expansion valve that expands the refrigerant flowing out of the outdoor condenser; a chiller connected between the chiller expansion valve and the compressor in the refrigerant circuit; a third circuit that is configured to allow the heating medium to flow therethrough and causes the heating medium flowing therethrough to exchange heat with outside air; and a fourth circuit that is configured to allow the heating medium to flow therethrough and connected to the chiller. In this case, the control unit can determine whether the temperature of the battery obtained by the battery temperature sensor is equal to or lower than a second temperature that is higher than the first temperature, and connect the first circuit, the second circuit, the third circuit, and the fourth circuit when it is determined that the temperature of the battery obtained by the battery temperature sensor is higher than the second temperature. Accordingly, when the temperature of the battery is high and it is desired to dissipate heat, the heat can be dissipated by heat dissipation by the radiator and heat absorption to the refrigerant through the chiller.

The control unit can determine whether the temperature of the battery obtained by the battery temperature sensor is equal to or higher than a third temperature that is higher than the second temperature, and connect the second circuit and the third circuit when it is determined that the temperature of the battery obtained by the battery temperature sensor is higher than the second temperature and lower than the third temperature. Accordingly, the heat of the battery can be dissipated to outside air through the radiator.

The drive device may include a charging controller to which an alternating current for charging the battery is input from outside. In this case, the control unit executes the first heating control and the second heating control during charging of the battery. That is, since the alternating current is input to the charging controller during charging of the battery, the charging controller generates heat. The battery can be heated by effectively using the waste heat of the charging controller.

The control unit can connect the first circuit and the fourth circuit during the first heating control. In addition, the control unit can also connect the first circuit, the second circuit, and the third circuit during the second heating control.

As described above, after the battery is heated by the electric heater when the temperature of the battery is low, when the temperature of the battery rises to a certain level, the battery can be heated to a recommended temperature by effectively using waste heat of the drive device. Thus, efficient charging can be performed on the battery in a low-temperature state. Brief Description of Drawings:
FIG. 1 is a functional block diagram of a vehicle thermal management system according to an embodiment of the present invention.
FIG. 2 is a diagram schematically showing an electric vehicle including the vehicle thermal management system.
FIG. 3 is a diagram showing the flow of a refrigerant during heating.
FIG. 4 is a diagram showing the flow of a coolant liquid in a first coolant liquid circuit.
FIG. 5 is a diagram showing the flow of the coolant liquid in a second coolant liquid circuit.
FIG. 6 is a diagram showing the flow of the coolant liquid in a third coolant liquid circuit.
FIG. 7 is a diagram showing the flow of the coolant liquid in a fourth coolant liquid circuit.
FIG. 8 is a flowchart showing the flow of control by a control unit.

An embodiment of the present invention will be now described in detail on the basis of the drawings. Note that the following description of the preferred embodiment is merely illustrative in nature and is not intended to limit the present invention, its application, or its use. For example, the relative sizes and positional relationships of the members shown in the drawings are for the purpose of describing one embodiment and do not limit the present invention.

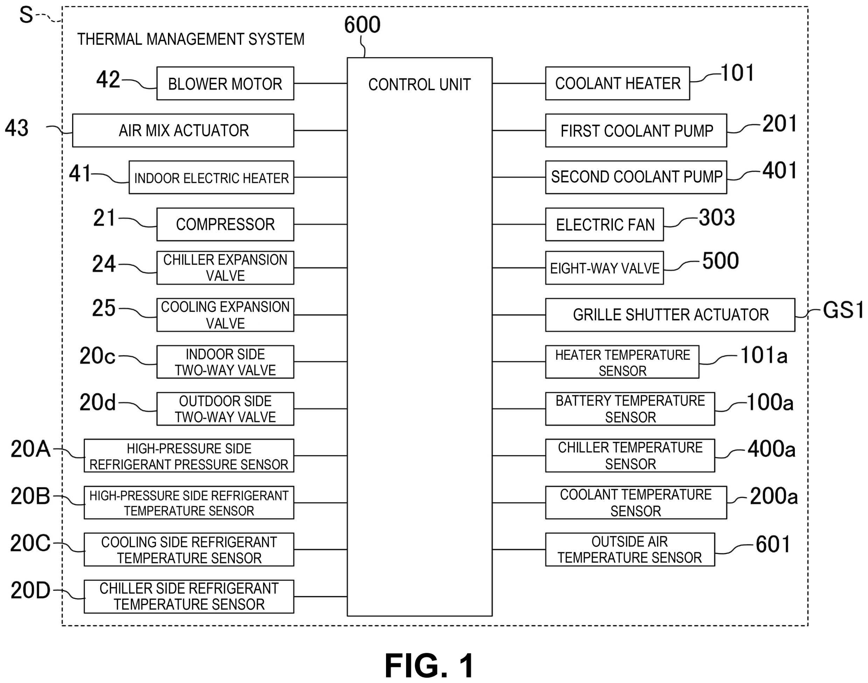

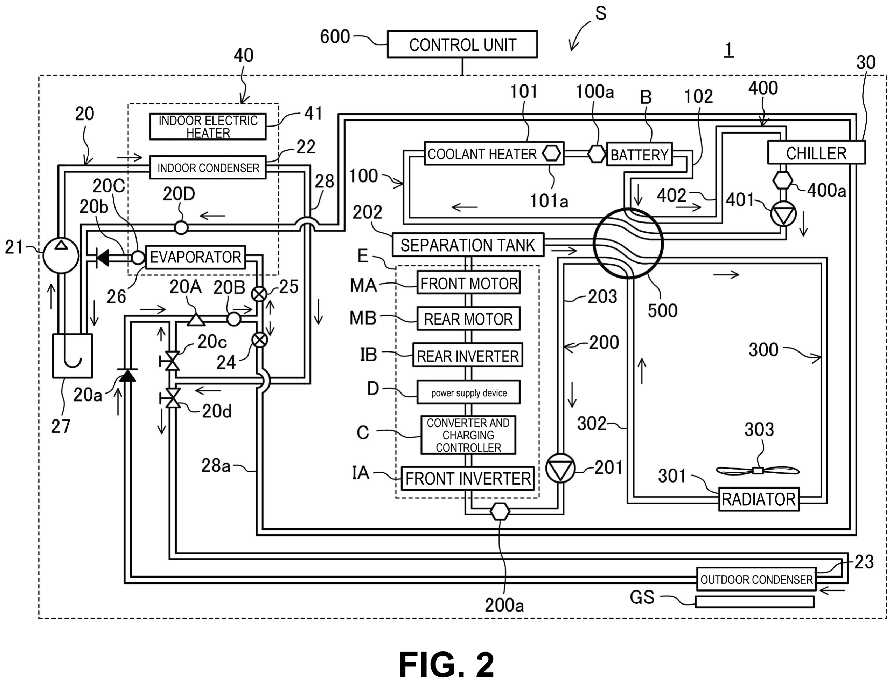

FIG. 1 is a functional block diagram of a vehicle thermal management system (hereinbelow, referred to as a "thermal management system") S according to the embodiment of the present invention. The thermal management system S is mounted on an electric vehicle 1 schematically shown in FIG. 2. That is, the electric vehicle 1 includes a front motor MA and a rear motor MB, and a battery B. The front motor MA and the rear motor MB are driving motors, traveling motors that generate a driving force that is required to cause the electric vehicle 1 to travel. The front motor MA drives front wheels, and the rear motor MB drives rear wheels. Both the front motor MA and the rear motor MB may be mounted on the electric vehicle 1, or only one of them may be mounted on the electric vehicle 1.

The battery B is not a battery for an accessory but a high-capacity driving secondary battery that supplies electric power to the front motor MA and the rear motor MB. Although a typical example of the battery B is a lithium-ion battery, a rechargeable battery (e.g., a nickel-metal hydride battery) other than a lithium-ion battery can be applied to the present invention. In the case of a lithium-ion battery, its shape may be, for example, a pouch shape or a cylindrical shape. During braking of the electric vehicle 1, energy regenerated in the front motor MA and the rear motor MB is stored as electric power in the battery B.

The electric vehicle 1 includes a front inverter IA that controls the front motor MA, and a rear inverter IB that controls the rear motor MB. For example, the electric vehicle 1 may include a front e-axle (not shown) that includes the front motor MA, the front inverter IA, and a front transaxle (not shown). In addition, for example, the electric vehicle 1 may include a rear e-axle (not shown) that includes the rear motor MB, the rear inverter IB, and a rear transaxle (not shown).

The electric vehicle 1 includes a DC/DC converter and a charging controller (collectively designated by reference character C). The DC/DC converter and charging controller C is a device for passing, to the battery B, current supplied from an external charger (not shown) as a charging current of a magnitude appropriate for charging the battery B. That is, charging of the battery B is performed through the DC/DC converter and charging controller C. The charging of the battery B can be both normal charging that performs charging with an electric power of 11 kW at most and fast charging that performs charging with an electric power exceeding 11 kW. Hereinbelow, the "DC/DC converter and charging controller" will be simply referred to as the "charging controller". An alternating current during normal charging is input to the charging controller.

Although not an essential component, the electric vehicle 1 includes a power supply device D. The power supply device D is a device for supplying electric power of the battery B to the outside, and includes, for example, an inverter configured to output electric power of 100 V.

The front motor MA, the rear motor MB, the front inverter IA, the rear inverter IB, and the charging controller C are examples of elements that constitute a drive device E for causing the electric vehicle 1 to travel. The electric vehicle 1 travels by supplying electric power of the battery B to the drive device E. Although in the present embodiment the charging controller C is included as a part of the drive device E, the charging controller C does not have to be a component of drive device E. The power supply unit D may be or may not be included as a component of the drive device E. The drive device E may include a device related to travel of the electric vehicle 1 in addition to the devices described above. In addition, a device that does not require temperature adjustment may be excluded from the drive device E of the present invention.

Although the present embodiment describes a case in which the thermal management system S is mounted on the electric vehicle 1, this is not a limitation, and the thermal management system S can also be mounted on, for example, a plug-in hybrid vehicle. When the thermal management system S is mounted on a plug-in hybrid vehicle, similar effects can be also achieved.

The thermal management system S includes a refrigerant circuit 20 through which a refrigerant circulates, and a chiller 30 for using cold heat generated in the refrigerant circuit 20 for, for example, cooling the battery B. The thermal management system S includes, separately from the refrigerant circuit 20 through which the refrigerant circulates, for example, a first circuit 100, a second circuit 200, a third circuit 300, and a fourth circuit 400 as circuits configured to allow a heating medium to flow therethrough.

The first circuit 100 is a circuit for performing temperature adjustment of the battery B using the heating medium flowing therethrough. The second circuit 200 is a circuit for performing temperature adjustment of the drive device E using the heating medium flowing therethrough. The third circuit 300 is a circuit including a radiator 301 that causes the heating medium flowing therethrough to exchange heat with outside air to dissipate heat. The fourth circuit 400 is a circuit connected to the chiller 30. The heating medium flowing through the first circuit 100, the second circuit 200, the third circuit 300, and the fourth circuit 400 is, for example, a coolant liquid. In the following description, the heating medium is described as the coolant liquid.

The thermal management system S further includes an electric eight-way valve 500 for switching the connection state of the first circuit 100, the second circuit 200, the third circuit 300, and the fourth circuit 400, and a control unit 600 that controls each device included in the thermal management system S. The eight-way valve 500 may be included in the control unit 600. Although the specific configuration of each of the refrigerant circuit 20, the first circuit 100, the second circuit 200, the third circuit 300, and the fourth circuit 400 will be described first, the following description is an example, and other components that are not described may be included.

First, the refrigerant circuit 20 will be described. The refrigerant circuit 20 includes a compressor 21 that compresses the refrigerant, an indoor condenser 22, an outdoor condenser 23, a chiller expansion valve 24, a cooling expansion valve 25, a cooling evaporator 26, an accumulator 27, and a refrigerant pipe 28. The refrigerant pipe 28 is a member that connects the devices 21, 22, 23, 24, 25, 26, 27, and since the refrigerant pipe 28 is provided between the devices 21, 22, 23, 24, 25, 26, 27, the refrigerant circuit 20 includes a plurality of refrigerant pipes 28. In FIG. 2, to avoid complication of the drawing, not all the refrigerant pipes, but only one of them is designated by the reference numeral.

Although not shown, the compressor 21 is an electric compressor including an electric motor and a compression mechanism that is actuated by the electric motor. As shown in FIG. 1, the compressor 21 is connected to the control unit 600, and control unit 600 controls switching between ON and OFF and the rotational speed during ON. The compressor 21 operates with a combination of control according to a requirement on the air conditioning side and control according to a cooling requirement of the battery B and a cooling requirement of the drive device E.

The indoor condenser 22 is a heat exchanger that is connected to a refrigerant discharge port (not shown) of the compressor 21 through the refrigerant pipe 28 and into which the high-temperature and high-pressure refrigerant compressed by the compressor 21 flows. The indoor condenser 22 is disposed inside a vehicle cabin and is a device for heating the inside of the vehicle cabin. The vehicle cabin is a space in which an occupant stays.

The outdoor condenser 23 is a heat exchanger that is connected to a refrigerant outflow port (not shown) of the indoor condenser 22 through the refrigerant pipe 28 and into which the refrigerant that has flowed through the indoor condenser 22, that is, the refrigerant compressed by the compressor 21 flows. The outdoor condenser 23 is provided outside the vehicle cabin. The outside of the vehicle cabin is the outside of the space in which the occupant stays and is a space in which heat exchange with outside air can be performed. Examples of the outside of the vehicle cabin include a motor room (not shown) in which the front motor MA and the rear motor MB are housed, and a front portion of the vehicle (e.g., the inside of a front grille).

The electric vehicle 1 of the present embodiment includes a grille shutter GS. The grille shutter GS is a device for opening and closing an opening of the front grille (not shown), and includes a grille shutter actuator GS1 as shown in FIG. 1. The grille shutter actuator GS1 is connected to the control unit 600, is controlled by the control unit 600, and operates the grille shutter GS from an open state to a closed state and from a closed state to an open state. When the outdoor condenser 23 is provided inside the front grille, bringing the grille shutter GS into a closed state reduces an amount of outside air flowing into the outdoor condenser 23, and bringing the grille shutter GS into an open state increases the amount of outside air flowing into the outdoor condenser 23.

The cooling evaporator 26 is disposed inside the vehicle cabin and is a device for cooling the inside of the vehicle cabin or dehumidifying air supplied into the vehicle cabin. A refrigerant outflow port (not shown) of the outdoor condenser 23 and a refrigerant inflow port (not shown) of the cooling evaporator 26 are connected by the refrigerant pipe 28. Between the outdoor condenser 23 and the cooling evaporator 26 in the refrigerant pipe 28, a cooling expansion valve 25 that expands the refrigerant flowing out of the outdoor condenser 23 is provided. The refrigerant expanded by the cooling expansion valve 25 flows into the cooling evaporator 26. The cooling expansion valve 25 is connected to the control unit 600 and its degree of opening is changeable by the control unit 600.

The refrigerant pipe 28 includes a chiller pipe 28a that extends to the chiller 30. The chiller 30 is a heat exchanger that is connected between the chiller expansion valve 24 and the compressor 21 and configured to be capable of exchanging heat with the heating medium which will be described further below. The chiller 30 is disposed at a location away from the outdoor condenser 23 and the radiator 301.

The chiller pipe 28a branches off from a portion upstream of the cooling expansion valve 25 in the refrigerant pipe 28, and the refrigerant flowing out of the outdoor condenser 23 flows into the chiller pipe 28a. The chiller pipe 28a is provided with a chiller expansion valve 24 that expands the refrigerant flowing out of the outdoor condenser 23. A refrigerant inflow port (not shown) of the chiller 30 is connected to a portion downstream of the chiller expansion valve 24 in the chiller pipe 28a. Thus, the refrigerant expanded by the chiller expansion valve 24 flows into the chiller 30.

The downstream side of the chiller pipe 28a is connected to a refrigerant inflow port (not shown) of the accumulator 27. A refrigerant outflow port of the cooling evaporator 26 is also connected to the refrigerant inflow port of the accumulator 27. The accumulator 27 performs gas-liquid separation of the refrigerant flowing in through the chiller 30 and/or the cooling evaporator 26. A liquid refrigerant outflow port (not shown) of the accumulator 27 is connected to a refrigerant suction port (not shown) of the compressor 21.

The refrigerant circuit 20 is provided with a check valve 20a between the outdoor condenser 23, and the chiller expansion valve 24 and the cooling expansion valve 25. This check valve 20a prevents backflow of the refrigerant from the chiller expansion valve 24 and cooling expansion valve 25 side to the outdoor condenser 23 side.

The refrigerant circuit 20 is provided with a check valve 20b between the cooling evaporator 26, and the chiller 30 and the accumulator 27. This check valve 20b prevents backflow of the refrigerant from the chiller 30 and accumulator 27 side to the cooling evaporator 26 side.

The refrigerant circuit 20 includes an indoor side two-way valve 20c and an outdoor side two-way valve 20d. The indoor side two-way valve 20c and the outdoor side two-way valve 20d are composed of, for example, solenoid valves and connected to the control unit 600, and the opening and closing operations are controlled by the control unit 600. The indoor side two-way valve 20c is provided between the indoor condenser 22 and the cooling evaporator 26, and when the indoor side two-way valve 20c is brought into an open state by the control unit 600, the refrigerant flowing out of the indoor condenser 22 flows into the chiller expansion valve 24 and the cooling expansion valve 25, whereas when the indoor side two-way valve 20c is brought into a closed state by the control unit 600, the refrigerant flowing out of the indoor condenser 22 dose not flow into the chiller expansion valve 24 and the cooling expansion valve 25. That is, the indoor side two-way valve 20c controls the flow of the refrigerant to the cooling evaporator 26 and the chiller 30.

The outdoor side two-way valve 20d is provided between the indoor condenser 22 and the outdoor condenser 23. When the outdoor side two-way valve 20d is brought into an open state by the control unit 600, the refrigerant flowing out of the indoor condenser 22 flows into the outdoor condenser 23, whereas when the outdoor side two-way valve 20d is brought into a closed state by the control unit 600, the refrigerant flowing out of the indoor condenser 22 dose not flow into the outdoor condenser 23. That is, the outdoor side two-way valve 20d controls the flow of the refrigerant to the outdoor condenser 23.

The refrigerant circuit 20 includes a high-pressure side refrigerant pressure sensor 20A, a high-pressure side refrigerant temperature sensor 20B, a cooling side refrigerant temperature sensor 20C, and a chiller side refrigerant temperature sensor 20D. The high-pressure side refrigerant pressure sensor 20A is provided on the downstream side of the indoor condenser 22 and the outdoor condenser 23 and on the upstream side of the chiller expansion valve 24 and the cooling expansion valve 25, and obtains the pressure of the refrigerant flowing through this point. The refrigerant pressure obtained by the high-pressure side refrigerant pressure sensor 20A is output to the control unit 600.

The high-pressure side refrigerant temperature sensor 20B is provided on the downstream side of the indoor condenser 22 and the outdoor condenser 23 and on the upstream side of the chiller expansion valve 24 and the cooling expansion valve 25, and obtains the temperature of the refrigerant flowing through this point. The refrigerant temperature obtained by the high-pressure side refrigerant temperature sensor 20B is output to the control unit 600.

The cooling side refrigerant temperature sensor 20C is provided between the cooling evaporator 26 and the check valve 20b, and obtains the temperature of the refrigerant flowing through this point. That is, the cooling side refrigerant temperature sensor 20C obtains the temperature of the refrigerant that has flowed out of the cooling evaporator 26. The refrigerant temperature obtained by the cooling side refrigerant temperature sensor 20C is output to the control unit 600.

The chiller side refrigerant temperature sensor 20D is provided between the chiller 30 and the accumulator 27, and obtains the temperature of the refrigerant flowing through this point. That is, the chiller side refrigerant temperature sensor 20D obtains the temperature of the refrigerant that has flowed out of the chiller 30. The refrigerant temperature obtained by the chiller side refrigerant temperature sensor 20D is output to the control unit 600.

The indoor condenser 22 and the cooling evaporator 26 constitute a part of a vehicle air conditioning device 40. The vehicle air conditioning device 40 further includes an indoor electric heater 41 and a blower motor 42 (shown in FIG. 1). The blower motor 42 is a device for blowing outside air and/or indoor air to the indoor condenser 22, the cooling evaporator 26, and the indoor electric heater 41. The indoor electric heater 41 and the blower motor 42 are connected to the control unit 600 and controlled by the control unit 600.

The vehicle air conditioning device 40 is provided with an air mix actuator 43 (shown in FIG. 1) that operates an air mix damper (not shown). The air mix actuator 43 is connected to the control unit 600 and controlled by the control unit 600. By the air mix actuator 43 operating the air mix damper, temperature adjustment of air-conditioning air supplied into the vehicle cabin is enabled.

That is, in the vehicle air conditioning device 40, the whole of the air blown by the blower motor 42 is supplied to the cooling evaporator 26. Basically, during cooling operation, the air mix actuator 43 operates the air mixer damper such that the whole of the air passing through the cooling evaporator 26 is supplied into the vehicle cabin without passing through the indoor condenser 22 and the indoor electric heater 41.

On the other hand, during heating operation, the air mix actuator 43 operates the air mix damper such that part or the whole of the air passing through the cooling evaporator 26 is supplied to the indoor condenser 22 and the indoor electric heater 41 and heated, and then supplied into the vehicle cabin.

The control unit 600 determines how much amount of the air that has passed through the cooling evaporator 26 should be supplied to the indoor condenser 22 and the indoor electric heater 41 in accordance with a target temperature inside the vehicle cabin, and controls the air mix actuator 43 such that the determined amount of air is supplied to the indoor condenser 22 and the indoor electric heater 41. The indoor electric heater 41 includes a heating element that generates heat by the supply of electric power, such as a PTC element. The indoor electric heater 41 may be provided as needed.

The first circuit 100 is a circuit for performing temperature adjustment of the battery B and may also be referred to as a temperature adjustment circuit for the battery B. The first circuit 100 includes a coolant heater 101, and a first coolant pipe 102.

The coolant heater 101 is an electric heater that includes a heating element that generates heat by the supply of electric power, such as a PTC element, and is controlled by the control unit 600. When the temperature of the battery B is low to the extent of not being appropriate for charging and discharging, the control unit 600 actuates the coolant heater 101, thereby heating the coolant liquid. When the temperature of the battery B is within a temperature range appropriate for charging and discharging, or when the temperature of the battery B exceeds the temperature range appropriate for charging and discharging, the control unit 600 stops the coolant heater 101.

The first coolant pipe 102 is a pipe for circulating the coolant liquid in the first circuit 100 through the eight-way valve 500. An upstream end and a downstream end of the first coolant pipe 102 are connected to connection ports of the eight-way valve 500. The coolant heater 101 is provided on the upstream side of the first coolant pipe 102. The battery B is provided downstream of the coolant heater 101 in the first coolant pipe 102.

A heat exchanger (not shown) is provided in a portion of the first coolant pipe 102, and this heat exchanger is disposed in contact with an outer face of battery B. Heat exchange is performed between the coolant liquid flowing through the inside of the heat exchanger and the battery B, where when the temperature of the battery B is higher than the temperature of the coolant liquid, the battery B is cooled, and conversely, when the temperature of the battery B is lower than the temperature of the coolant liquid, the battery B is heated.

The first circuit 100 is provided with a heater temperature sensor 101a, and a battery temperature sensor 100a. The heater temperature sensor 101a is a sensor for obtaining the temperature of the coolant heater 101. The heater temperature obtained by the heater temperature sensor 101a is output to the control unit 600.

The battery temperature sensor 100a is a sensor for obtaining the temperature of the battery B. The battery temperature sensor 100a may obtain the temperature of the battery B, for example, by obtaining the temperature of a cell surface or the vicinity of a cell of the battery B or by obtaining the temperature of the coolant liquid in the vicinity of the battery B, and there is no particular limitation on the position or location where the battery temperature sensor 100a is provided. Information about the temperature of the battery B obtained by the battery temperature sensor 100a is output to the control unit 600.

The second circuit 200 is a circuit for performing temperature adjustment of the drive device E and may also be referred to as a temperature adjustment circuit for the drive device E. The second circuit 200 includes a first coolant pump 201, a separation tank 202, and a second coolant pipe 203.

The second coolant pipe 203 is a pipe for circulating the coolant liquid in the second circuit 200 through the eight-way valve 500. An upstream end and a downstream end of the second coolant pipe 203 are connected to connection ports of the eight-way valve 500. The first coolant pump 201 is provided on the upstream side of the second coolant pipe 203 and forms a flow that feeds the coolant liquid in the second coolant pipe 203 to the downstream side and circulates the coolant liquid. The drive device E is provided downstream of the first coolant pump 201 in the second coolant pipe 203. The drive device E is a cooling target device cooled by the coolant liquid flowing through the second circuit 200.

Although there is no particular limitation on the supply order of the coolant liquid to the front motor MA, the rear motor MB, the front inverter IA, the rear inverter IB, the charging controller C, and the power supply device D that are included in the drive device E, the second coolant pipe 203 is configured such that the coolant liquid is supplied in the following order in the present embodiment. That is, from the upstream side to the downstream side in the flow direction of the coolant liquid, the front inverter IA, the charging controller C, the power supply device D, the rear inverter IB, the rear motor MB, and the front motor MA are connected in series in this order through the second coolant pipe 203. For example, the front motor MA and the rear motor MB may be a water-cooled type that is directly cooled by the coolant liquid or an oil-cooled type that is cooled by circulating oil. In the case of the oil-cooled type, the temperature of the oil can be reduced by causing the oil and the coolant liquid to exchange heat.

The front inverter IA, the charging controller C, the power supply device D, the rear inverter IB, and the like may also be an oil-cooled type or a water-cooled type. In the case of the water-cooled type, the front inverter IA, the charging controller C, the power supply device D, the rear inverter IB, and the like can be cooled using a heat exchange structure (not shown) provided in a portion of the second coolant pipe 203. That is, although there is no particular limitation on the structure, the front inverter IA, the charging controller C, the power supply device D, and the rear inverter IB can be cooled by heat exchange performed between the coolant liquid flowing through the heat exchange structure of the second coolant pipe 203, and the front inverter IA, the charging controller C, the power supply device D and the rear inverter IB.

The separation tank 202 is provided downstream of the drive device E in the second coolant pipe 203. The coolant liquid that has passed through the drive device E flows into the separation tank 202 and then flows to the eight-way valve 500. Although not shown, the separation tank 202 is connected to a reserve tank in which the coolant liquid is stored.

The second circuit 200 is provided with a coolant temperature sensor 200a. The coolant temperature sensor 200a is a sensor for obtaining the temperature of the coolant liquid in the second coolant pipe 203. The coolant temperature sensor 200a is disposed between the first coolant pump 201 and the drive device E.

The coolant temperature sensor 200a may constitute a drive device temperature sensor that obtains the temperature of the drive device E. For example, by the coolant temperature sensor 200a obtaining the temperature of the coolant flowing through the second circuit 200, it is possible to obtain an inlet temperature of the drive device E, that is, the temperature of the drive device E. In addition, the thermal management system S may include a drive device temperature sensor that obtains the temperature of the drive device E separately from the coolant temperature sensor 200a. For example, a temperature sensor that obtains the temperature of a relatively heat-sensitive device such as the front inverter IA or the rear inverter IB may be provided, and this temperature sensor may be used as the drive device temperature sensor. In this manner, there is no particular limitation on the position or location where the drive device temperature sensor is provided. Hereinbelow, a case in which the coolant temperature sensor 200a is used as the drive device temperature sensor will be described. Information about the temperature of the drive device E obtained by the coolant temperature sensor 200a is output to the control unit 600.

The third circuit 300 includes a third coolant pipe 302, and an electric fan 303, in addition to the radiator 301 for dissipating heat of the coolant liquid to outside air. The radiator 301 is provided outside the vehicle cabin, as with the outdoor condenser 23. In the present embodiment, the outdoor condenser 23 is provided inside the front grille in view of ensuring a sufficient ventilation amount, and the radiator 301 is disposed on the rear side (the downstream side in the outside air flow direction) of the outdoor condenser 23 that is provided inside the front grille. The outdoor condenser 23 and the radiator 301 may be modularized being stacked in the outside air flow direction, or the outdoor condenser 23 and the radiator 301 may be separately mounted on a vehicle body. In any case, the positional relationship between the outdoor condenser 23 and the radiator 301 is set such that outside air passing through the outdoor condenser 23 is introduced into the radiator 301.

The third coolant pipe 302 is a pipe for circulating the coolant liquid in the third circuit 300 through the eight-way valve 500. An upstream end and a downstream end of the third coolant pipe 302 are connected to connection ports of the eight-way valve 500.

The electric fan 303 is a device for feeding outside air to the radiator 301 and is provided, for example, inside the front grille. When the electric fan 303 is actuated, the control unit 600 controls the grille shutter actuator GS1 to open the grille shutter GS.

The flow direction of outside air formed by the electric fan 303 is the direction from the front side to the rear side of the vehicle. This flow direction of outside air is the same as the flow direction of outside air during travel of the electric vehicle 1. Since the outdoor condenser 23 is disposed on the front side of the radiator 301, the flow formed by the electric fan 303 causes outside air to pass through the outdoor condenser 23 and then flow into the radiator 301. The same flow of outside air also occurs during travel of the electric vehicle 1. The electric fan 303 is connected to the control unit 600, and the control unit 600 controls switching between ON and OFF and the rotational speed during ON in accordance with the degree of requirement of heat dissipation. The electric fan 303 operates not only for feeding outside air to the radiator 301 but also when the refrigerant circuit 20 is operating, thereby supplying outside air also to the outdoor condenser 23. Thus, it can be said that the electric fan 303 also constitutes a part of the refrigerant circuit 20.

The fourth circuit 400 is a circuit for cooling the coolant liquid using the chiller 30 and may also be referred to as a coolant liquid cooling circuit. The fourth circuit 400 includes a second coolant pump 401, and a fourth coolant pipe 402. The fourth coolant pipe 402 is a pipe for circulating the coolant liquid in the fourth circuit 400 through the eight-way valve 500. An upstream end and a downstream end of the fourth coolant pipe 402 are connected to connection ports of the eight-way valve 500.

The second coolant pump 401 is provided in the fourth coolant pipe 402 and forms a flow that feeds the coolant liquid in the fourth coolant pipe 402 to the downstream side and circulates the coolant liquid. The chiller 30 is provided upstream of the second coolant pump 401 in the fourth coolant pipe 402.

The chiller 30 is provided with a refrigerant channel through which the refrigerant supplied by the chiller pipe 28a of the refrigerant circuit 20 flows, and a coolant liquid channel through which the coolant liquid supplied by the fourth coolant pipe 402 flows. The refrigerant flowing through the refrigerant channel and the coolant liquid flowing through the coolant liquid channel can exchange heat. When the temperature of the coolant liquid is higher than the temperature of the refrigerant, it is possible to cool the coolant liquid.

The fourth circuit 400 is provided with a chiller temperature sensor 400a. The chiller temperature sensor 400a is a sensor for obtaining the temperature of the coolant liquid that has been cooled by the chiller 30. The temperature of the coolant liquid obtained by the chiller temperature sensor 400a is output to the control unit 600. The fourth coolant pipe 402 of the fourth circuit 400 is connected to a reserve tank (not shown).

The control unit 600 includes a microcomputer including, for example, a central processing unit, a read only memory (ROM), a random access memory (RAM), and the like, various signal processing devices, an input/output interface, and the like. A program is stored in a storage unit (not shown) included in the control unit 600, and the central processing unit executes various processes and control as described below in accordance with the program.

The control unit 600 includes a part for controlling the vehicle air conditioning device 40, a part for controlling the first circuit 100, the second circuit 200, the third circuit 300, and the fourth circuit 400, and a part for controlling the eight-way valve 500, and these may be composed of a combination of hardware and software, or may be composed of hardware alone.

The part for controlling the vehicle air conditioning device 40, the part for controlling the first circuit 100, the second circuit 200, the third circuit 300, and the fourth circuit 400, and the part for controlling the eight-way valve 500 may be physically separated. In addition, the part for controlling the vehicle air conditioning device 40, the part for controlling the first circuit 100, the second circuit 200, the third circuit 300, and the fourth circuit 400, and the part for controlling the eight-way valve 500 may be integrated. In addition, the control unit 600 may include a part that controls the drive device E of the vehicle. In this manner, there is no particular limitation on the configuration of the control unit 600, and the control unit 600 may be configured to be capable of integrally controlling in-vehicle equipment and devices. For example, the control unit 600 may be configured to be capable of obtaining vehicle speed information, thereby enabling the control unit 600 to also perform control based on the vehicle speed.

An outside air temperature sensor 601 that obtains the outside air temperature is connected to the control unit 600, and the outside air temperature obtained by the outside air temperature sensor 601 (obtained outside air temperature) is input to the control unit 600. The outside air temperature sensor 601 is a component of the thermal management system S. Although there is no particular limitation on the position of the outside air temperature sensor 601, the position can be, for example, the upstream side in the outside air flow direction in the front grille. In addition, although not shown, an indoor air temperature sensor that obtains the temperature inside the vehicle cabin, an operation panel that adjusts the set temperature of air conditioning, and the like are also connected to the control unit 600.

In addition, the eight-way valve 500 is a device for connecting and disconnecting two or more of the first circuit 100, the second circuit 200, the third circuit 300, and the fourth circuit 400, and is controlled by the control unit 600 as described below. Note that the connections and disconnections of the first circuit 100, the second circuit 200, the third circuit 300, and the fourth circuit 400 shown below are examples, and other connections and disconnections can also be performed.

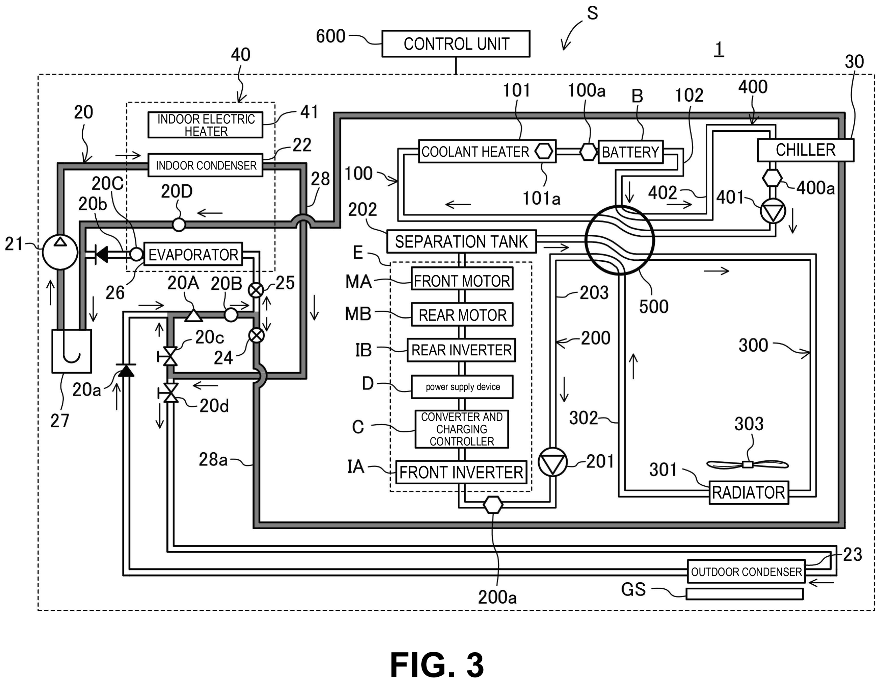

The control unit 600 controls the refrigerant circuit 20 and the vehicle air conditioning device 40 during air conditioning inside the vehicle cabin. In heating operation that heats the inside of the vehicle cabin, the control unit 600 actuates the compressor 21 of the refrigerant circuit 20 to supply the high-temperature and high-pressure refrigerant to the indoor condenser 22 to condense the refrigerant, thereby causing the indoor condenser 22 to serve as an air heater. The control unit 600 actuates the indoor electric heater 41 as needed, actuates the blower motor 42 of the vehicle air conditioning device 40, and further controls the air mix actuator 43 to operate the air mix damper such that air-conditioning air having a target temperature can be obtained. The obtained air-conditioning air is supplied to each part of the vehicle cabin. In FIG. 3, a part where the refrigerant flows is shown in black.

Although not shown, in cooling operation that cools the inside of the vehicle cabin, the control unit 600 actuates the compressor 21 of the refrigerant circuit 20 to supply the high-temperature and high-pressure refrigerant to the indoor condenser 22 and the outdoor condenser 23 to condense the refrigerant, and then supplies the gas-liquid two-phase refrigerant expanded by the cooling expansion valve 25 to the cooling evaporator 26 to evaporate the refrigerant, thereby causing the cooling evaporator 26 to serve as an air cooler. The control unit 600 actuates the blower motor 42 of the vehicle air conditioning device 40 and further controls the air mix actuator 43 to operate the air mix damper such that air-conditioning air having a target temperature can be obtained. Note that when cooling of the inside of the vehicle cabin is not required, the blower motor 42 may be kept stopped. Accordingly, heat absorption by the cooling evaporator 26 is hardly performed.

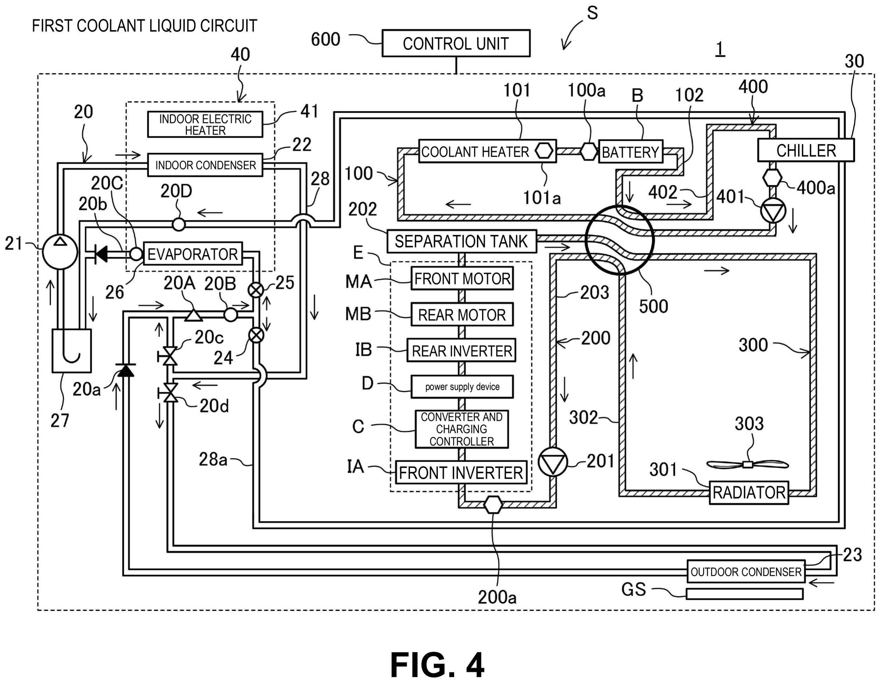

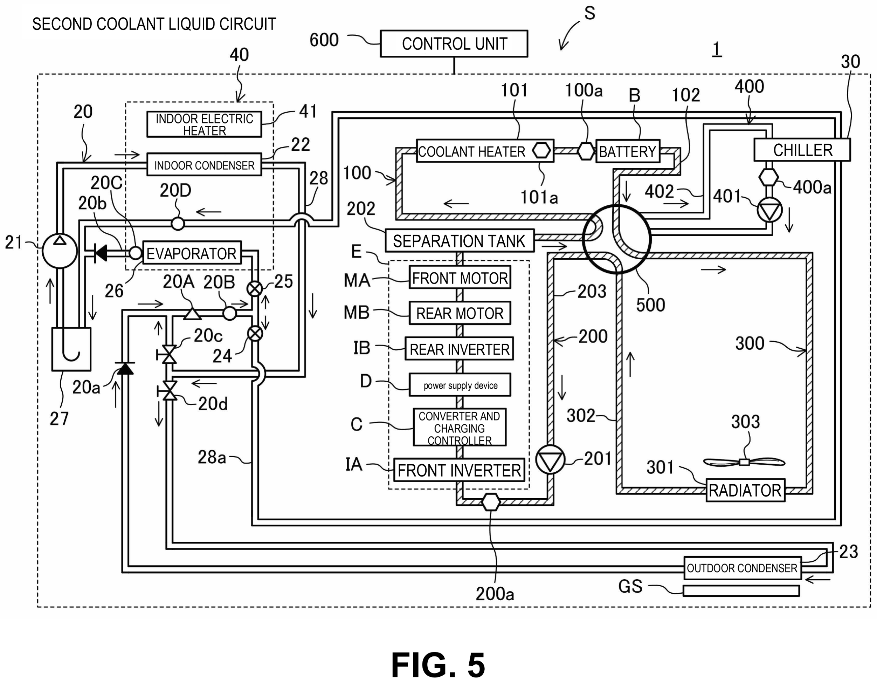

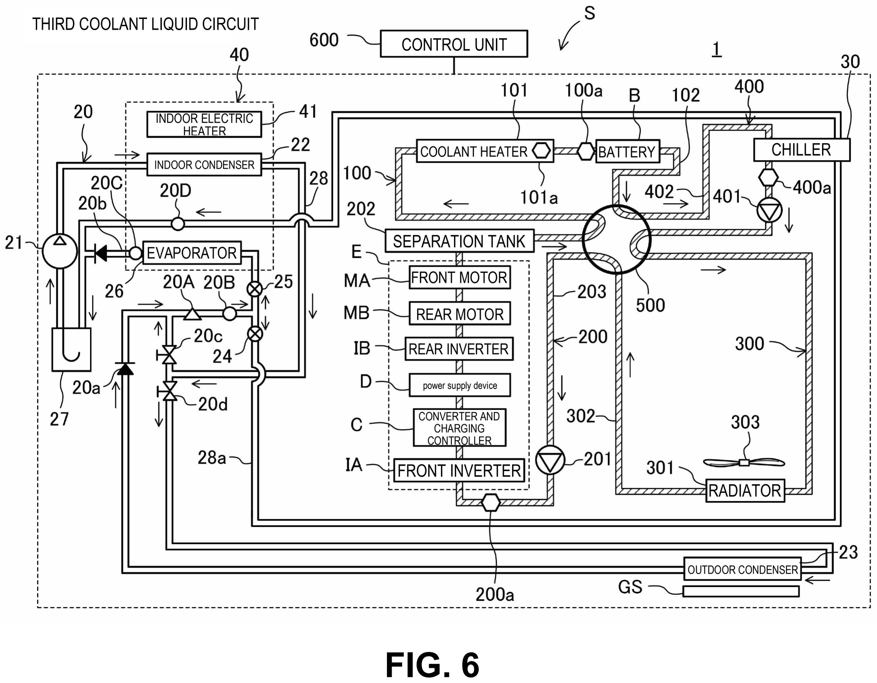

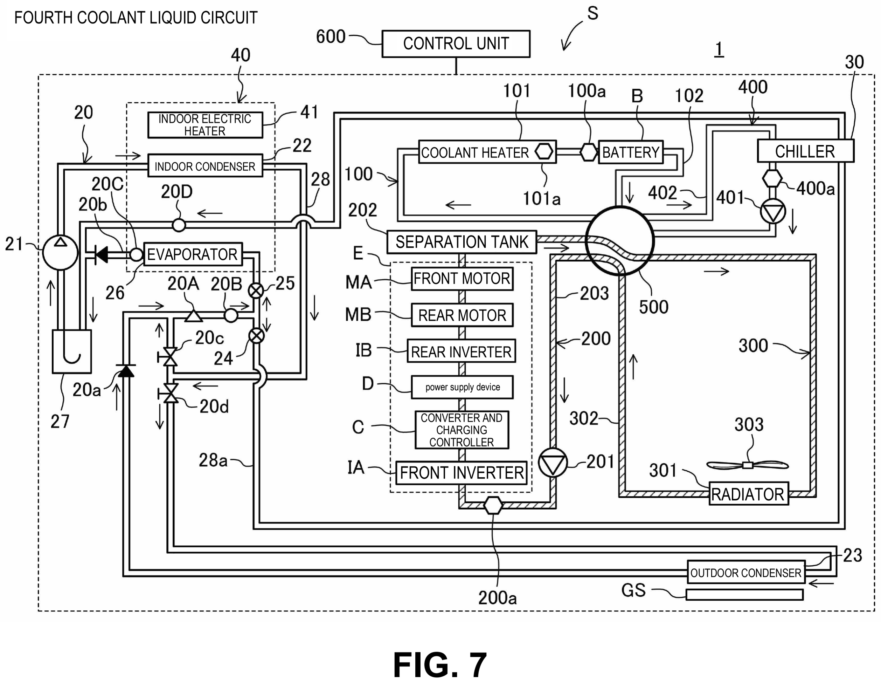

The control unit 600 forms first to fourth coolant liquid circuits as shown in FIGS. 4 to 7, respectively, by operating the eight-way valve 500. FIG. 4 shows the first coolant liquid circuit, FIG. 5 shows the second coolant liquid circuit, FIG. 6 shows the third coolant liquid circuit, and FIG. 7 shows the fourth coolant liquid circuit. In each drawing, a part where the coolant liquid flows is shown with cross hatching.

As shown in FIG. 4, the control unit 600 controls the eight-way valve 500 to connect the first coolant pipe 102 of the first circuit 100 and the fourth coolant pipe 402 of the fourth circuit 400 to form the first coolant liquid circuit and connect the second coolant pipe 203 of the second circuit 200 and the third coolant pipe 302 of the third circuit 300, and further disconnect the first circuit 100 and the fourth circuit 400 from the second circuit 200 and the third circuit 300. The circuit formed by the first circuit 100 and the fourth circuit 400 is referred to as the first coolant liquid circuit (first heating medium circuit).

Then, the control unit 600 actuates the second coolant pump 401. When the second coolant pump 401 is actuated, since the first coolant pipe 102 of the first circuit 100 and the fourth coolant pipe 402 of the fourth circuit 400 are connected, the coolant liquid flows from the second coolant pump 401 through the eight-way valve 500, the first coolant pipe 102, the coolant heater 101, the battery B, the eight-way valve 500, the fourth coolant pipe 402, and the chiller 30 in this order, and is suctioned into the second coolant pump 401. In this manner, the coolant liquid is circulated through the first circuit 100 and the fourth circuit 400.

When the coolant heater 101 is actuated in the first coolant liquid circuit, the coolant liquid flowing through the first coolant pipe 102 of the first circuit 100 is heated. Since the heated coolant liquid is supplied to the battery B, it is possible to heat the battery B. Since the coolant heater 101 can heat the coolant liquid early, heating of the battery B is performed quickly.

In addition, the control unit 600 actuates the first coolant pump 201. When the first coolant pump 201 is actuated, since the second coolant pipe 203 of the second circuit 200 and the third coolant pipe 302 of the third circuit 300 are connected, the coolant liquid flows from the first coolant pump 201 through the drive device E, the separation tank 202, the eight-way valve 500, the third coolant pipe 302, the radiator 301, the eight-way valve 500, and the second coolant pipe 203 in this order, and is suctioned into the first coolant pump 201. The first coolant pump 201 may be actuated as necessary, and may be stopped depending on the situation.

As shown in FIG. 5, the control unit 600 controls the eight-way valve 500 to connect the first coolant pipe 102 of the first circuit 100, the second coolant pipe 203 of the second circuit 200, and the third coolant pipe 302 of the third circuit 300 to form the second coolant liquid circuit, and further disconnect the fourth circuit 400 from the first circuit 100, the second circuit 200, and the third circuit 300. The circuit formed by the first circuit 100, the second circuit 200, and the third circuit 300 is referred to as the second coolant liquid circuit (second heating medium circuit).

The control unit 600 forms the second coolant liquid circuit and actuates the first coolant pump 201. When the first coolant pump 201 is actuated, the coolant liquid flows through the drive device E, the separation tank 202, the eight-way valve 500, the coolant heater 101, the battery B, the eight-way valve 500, the radiator 301, the eight-way valve 500, and the first coolant pump 201. Accordingly, when waste heat is dissipated from the drive device E, the coolant liquid flowing through the second coolant pipe 203 of the second circuit 200 absorbs the waste heat of the drive device E, and the coolant liquid that has absorbed the waste heat of the drive device E flows through the first coolant pipe 102 of the first circuit 100 and heats the battery B. Accordingly, the waste heat of the drive device E can be stored in the battery B. The second coolant liquid circuit can also be referred to as the heat storage circuit for the battery B.

As shown in FIG. 6, when the control unit 600 forms the third coolant liquid circuit, the control unit 600 controls the eight-way valve 500 to connect the first coolant pipe 102 of the first circuit 100, the second coolant pipe 203 of the second circuit 200, the third coolant pipe 302 of the third circuit 300, and the fourth coolant pipe 402 of the fourth circuit 400. The circuit formed by the first circuit 100, the second circuit 200, the third circuit 300, and the fourth circuit 400 is referred to as the third coolant liquid circuit (third heating medium circuit).

Then, the control unit 600 actuates the first coolant pump 201 and/or the second coolant pump 401. When the first coolant pump 201 and/or the second coolant pump 401 is actuated, the coolant liquid flows from the radiator 301 through the eight-way valve 500, the first coolant pump 201, the drive device E, the separation tank 202, the eight-way valve 500, the coolant heater 101, the battery B, the eight-way valve 500, the chiller 30, the second coolant pump 401, the eight-way valve 500, and the radiator 301 in this order. In the second coolant liquid circuit, waste heat of the drive device E and waste heat of the battery B are absorbed by the refrigerant in the refrigerant circuit 20 through chiller 30 and can be effectively used as a heat source for heating. In the third coolant liquid circuit, although only one of the first coolant pump 201 and the second coolant pump 401 may be actuated, it may be preferable to actuate both the first coolant pump 201 and the second coolant pump 401 in view of increasing the heat exchange amount in each part.

As shown in FIG. 7, when it is desired to maintain the temperature of the battery B, the control unit 600 forms the fourth coolant liquid circuit. When the fourth coolant liquid circuit is formed, the control unit 600 controls the eight-way valve 500 to connect the second coolant pipe 203 of the second circuit 200 and the third coolant pipe 302 of the third circuit 300.
The circuit formed by the second circuit 200 and the third circuit 300 is referred to as the fourth coolant liquid circuit (fourth heating medium circuit). The first circuit 100 and the fourth circuit 400 are disconnected from the second circuit 200 and the third circuit 300.

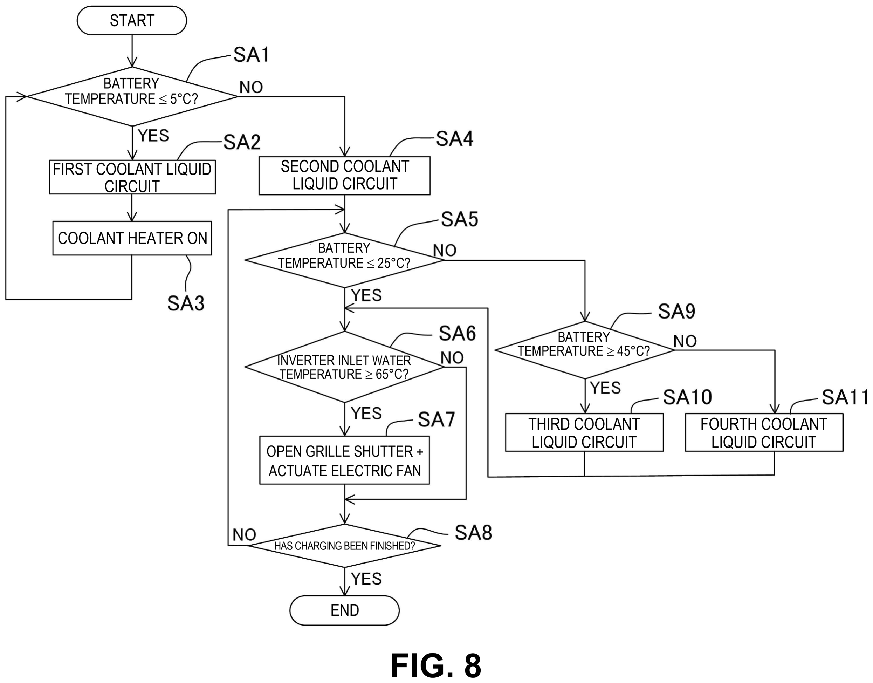

A specific example of the control by the control unit 600 will be described on the basis of a flowchart shown in FIG. 8. The flowchart shown in FIG. 8 starts, for example, when charging of the battery B of the electric vehicle 1 using a normal charger is started. Thus, the flowchart shown in FIG. 8 shows the control that is executed during charging. In addition, the flowchart shown in FIG. 8 may be started a predetermined time before the charging of the battery B using the normal charger is started. The control unit 600 may, for example, acquire a scheduled start time of charging by the normal charger and start the flowchart shown in FIG. 8 when the acquired scheduled start time of charging arrives.

In step SA1 after the start, the control unit 600 determines whether the temperature of the battery B obtained by battery temperature sensor 100a (hereinbelow, simply referred to as the temperature of the battery B) is equal to or lower than 5°C (the first temperature). The first temperature that serves as a determination threshold is not limited to 5°C, and may be any temperature at which the battery B mounted on the electric vehicle 1 cannot be charged or the charging efficiency of the battery B is significantly low. The first temperature can be set in accordance with the shape of the battery B or the like, and, for example, in the case of a pouch-type lithium-ion battery, the first temperature can be set to a temperature lower than 5°C since charging may be possible even at 5°C or lower. On the other hand, in the case of a cylindrical lithium-ion battery, 5°C may be preferable since charging cannot be performed at 5°C or lower.

When YES is determined in step SA1 and the current temperature of the battery B is a temperature unsuitable for charging, the flow advances to step SA2. In step SA2, the control unit 600 forms the first coolant liquid circuit shown in FIG. 4. In addition, in the following step SA3, the control unit 600 actuates the coolant heater 101 of the first circuit 100. Step SA2 and step SA3 may be performed simultaneously, or step SA3 may be performed earlier than step SA2.

When the coolant heater 101 is actuated, the coolant liquid in the first coolant pipe 102 of the first circuit 100 is heated. Since the second coolant pump 401 of the fourth circuit 400 is operating, the coolant liquid heated by the coolant heater 101 is supplied to the battery B and the battery B is heated. In this manner, by heating the coolant liquid in the first circuit 100 using the coolant heater 101, the temperature of the battery B can be increased early. Steps SA2, SA3 are examples of the first heating control.

After step SA3, the flow returns to step SA1, and temperature determination for the battery B is performed. When the current temperature of the battery B is a temperature unsuitable for charging, the flow advances to steps SA2, SA3 to continue the heating of the battery B using the coolant heater 101. On the other hand, when the current temperature of the battery B rises to a chargeable temperature, NO is determined in step SA1 and the flow advances to step SA4.

In step SA4, the control unit 600 forms the second coolant liquid circuit shown in FIG. 5 and circulates the coolant liquid in the first circuit 100, the second circuit 200, and the third circuit 300. This is an example of the second heating control. That is, as the temperature of the battery B rises through steps SA2, SA3, the control unit 600 executes the second heating control, and the coolant liquid that has absorbed waste heat dissipated from the drive device E is supplied to the battery B and the battery B is heated. Thus, the waste heat of the drive device E can be stored in the battery B, so that the waste heat of the drive device E can be effectively used.

Then, the flow advances to step SA5, and the control unit 600 determines whether the current temperature of the battery B is equal to or lower 25°C. The "25°C" in step SA5 is a determination threshold in step SA5 and is an example of the second temperature that is higher than the first temperature, which is the determination threshold in step SA1. The second temperature is not limited to 25°C, and may be any temperature higher than the first temperature.

When YES is determined in step SA5 and the current temperature of the battery B is equal to or lower 25°C, the flow advances to step SA6. In step SA6, the control unit 600 determines whether an inverter inlet water temperature is equal to or higher than 65°C. The "65°C" in step SA6 is a determination threshold in step SA6, which is not limited to 65°C. For example, when the determination threshold in step SA6 is defined as a fourth temperature, the fourth temperature may be any temperature higher than a third temperature (a determination threshold in step SA9), which will be described further below.

When YES is determined in step SA6 and the inverter inlet water temperature is equal to or higher than 65°C, the flow advances to step SA7. In step SA7, the control unit 600 controls the grille shutter actuator GS1 to bring the grille shutter GS into an open state and actuates the electric fan 303. In this manner, the control unit 600 determines whether the temperature of the drive device E is equal to or higher than the fourth temperature, and actuates the electric fan 303 that feeds outside air to the radiator 301 when the temperature of the drive device E is equal to or higher than the fourth temperature, thereby enabling overheating of the drive device E to be inhibited. Accordingly, it is possible to avoid damage to the front inverter IA and the rear inverter IB, which are particularly sensitive to heat.

In step SA8, the control unit 600 determines whether the charging of the battery B has been finished. When it is determined in step SA8 that the charging has been finished, the flow is finished. On the other hand, when it is determined in step SA8 that the charging has not been finished, the flow returns to step SA5. When NO is determined in step SA5 and the current temperature of the battery B is higher than 25°C, the flow advances to step SA9. In step SA9, the control unit 600 determines whether the current temperature of the battery B is equal to or higher than 45°C. The "45°C" in step SA9 is a determination threshold in step SA9 and is an example of the third temperature that is higher than the second temperature, which is the determination threshold in step SA5. The third temperature is not limited to 45°C and may be any temperature higher than the second temperature.

When YES is determined in step SA9 and the current temperature of the battery B is equal to or higher than 45°C, the flow advances to step SA10. In step SA10, the control unit 600 forms the third coolant liquid circuit shown in FIG. 6 and circulates the coolant liquid in the first circuit 100, the second circuit 200, the third circuit 300, and the fourth circuit 400. In this manner, the control unit 600 determines in step SA5 whether the temperature of the battery B is equal to or lower than the second temperature, and connects the first circuit 100, the second circuit 200, the third circuit 300, and the fourth circuit 400 when it is determined that the temperature of the battery B is higher than the second temperature. Then, in step SA9, when it is determined that the current temperature of the battery B is equal to or higher than 45°C and is in a temperature state in which cooling of the battery B is required, the heat of the coolant liquid is dissipated by the radiator 301 to outside air and absorbed by the refrigerant through chiller 30, thereby inhibiting overheating of the battery B and enhancing charging efficiency. After step SA10, the flow advances to step SA6, and inverter inlet water temperature determination is performed.

When NO is determined in step SA9 and the current temperature of the battery B is lower than 45°C, the flow advances to step SA11. In step SA11, the control unit 600 forms the fourth coolant liquid circuit shown in FIG. 7. That is, the control unit 600 determines in step SA9 whether the temperature of the battery B is equal to or higher than the third temperature (45°C), and connects the second circuit 200 and the third circuit 300 and circulates the coolant liquid in the second circuit 200 and the third circuit 300 when it is determined that the temperature of the battery B is higher than the second temperature and lower than the third temperature. In this fourth coolant liquid circuit, since the first circuit 100 that performs temperature adjustment of the battery B is disconnected from the second circuit 200 and the third circuit 300, the temperature of the battery B is maintained at an appropriate temperature. On the other hand, heat generated in the drive device E is dissipated by the radiator 301 to outside air.

The embodiment described above is merely illustrative in all respects and should not be interpreted in a limited manner. Furthermore, any modifications and changes falling within the equivalent scope of the claims are all within the scope of the present invention.

### [Industrial Applicability]

As described above, the vehicle thermal management system according to the present disclosure can be used in, for example, an electric vehicle.
- 1: electric vehicle
- 20: refrigerant circuit
- 21: compressor
- 22: indoor condenser
- 23: outdoor condenser
- 24: chiller expansion valve
- 25: cooling expansion valve
- 26: cooling evaporator
- 30: chiller
- 100: first circuit
- 100a: battery temperature sensor
- 101: coolant heater (electric heater)
- 200: second circuit
- 300: third circuit
- 301: radiator
- 400: fourth circuit
- 600: control unit
- 601: outside air temperature sensor
- B: battery
- C: charging controller
- E: drive device
- S: thermal management system

## Claims

1. A vehicle thermal management system (S) mounted on a vehicle (1) that travels by supplying electric power of a battery (B) to a drive device (E), the vehicle thermal management system (S) comprising:
a first circuit (100) that is configured to allow a heating medium to flow therethrough and includes an electric heater (101) that heats the heating medium, the first circuit (100) performing temperature adjustment of the battery (B) using the heating medium flowing therethrough;
a second circuit (200) that is configured to allow the heating medium to flow therethrough and performs temperature adjustment of the drive device (E) using the heating medium flowing therethrough;
a battery temperature sensor (100a) that obtains a temperature of the battery (B); and
a control unit (600) that determines whether the temperature of the battery (B) obtained by the battery temperature sensor (100a) is equal to or lower than a first temperature, executes first heating control that heats the heating medium in the first circuit (100) using the electric heater (101) when it is determined that the temperature of the battery (B) obtained by the battery temperature sensor (100a) is equal to or lower than the first temperature, and
subsequently, when the temperature of the battery (B) obtained by the battery temperature sensor (100a) becomes higher than the first temperature, connects the first circuit (100) and the second circuit (200) and
executes second heating control that heats the heating medium using waste heat of the drive device (E).

2. The vehicle thermal management system (S) according to claim 1, further comprising:
a refrigerant circuit (20) including a compressor (21) that compresses a refrigerant, an outdoor condenser (23) into which the refrigerant compressed by the compressor (21) flows, and a chiller expansion valve (24) that expands the refrigerant flowing out of the outdoor condenser (23);
a chiller (30) connected between the chiller expansion valve (24) and the compressor (21);
a third circuit (300) that is configured to allow the heating medium to flow therethrough and causes the heating medium flowing therethrough to exchange heat with outside air; and
a fourth circuit (400) that is configured to allow the heating medium to flow therethrough and connected to the chiller (30),
wherein the control unit (600) determines whether the temperature of the battery (B) obtained by the battery temperature sensor (100a) is equal to or lower than a second temperature that is higher than the first temperature, and connects the first circuit (100), the second circuit (200), the third circuit (300), and the fourth circuit (400) when it is determined that the temperature of the battery (B) obtained by the battery temperature sensor (100a) is higher than the second temperature.

3. The vehicle thermal management system (S) according to claim 2, wherein the control unit (600) determines whether the temperature of the battery (B) obtained by the battery temperature sensor (100a) is equal to or higher than a third temperature that is higher than the second temperature, and connects the second circuit (200) and the third circuit (300) when it is determined that the temperature of the battery (B) obtained by the battery temperature sensor (100a) is higher than the second temperature and lower than the third temperature.

4. The vehicle thermal management system (S) according to any one of the claims 1 to 3, wherein the drive device (E) includes a charging controller (C) to which an alternating current for charging the battery (B) is input from outside, and the control unit (600) executes the first heating control and the second heating control during charging of the battery (B).

5. The vehicle thermal management system (S) according to any one of the claims 2 to 4, wherein the control unit (600) connects the first circuit (100) and the fourth circuit (400) during the first heating control.

6. The vehicle thermal management system (S) according to any one of the claims 2 to 5, wherein the control unit (600) connects the first circuit (100), the second circuit (200), and the third circuit (300) during the second heating control.

7. The vehicle thermal management system (S) according to any one of the claims 2 to 6, further comprising a drive device temperature sensor (200a) that obtains a temperature of the drive device (E), wherein the control unit (600) determines whether the temperature of the drive device (E) obtained by the drive device temperature sensor (200a) is equal to or higher than a fourth temperature that is higher than the third temperature, and actuates an electric fan (303) that feeds outside air to a radiator (301) when the temperature of the drive device (E) obtained by the drive device temperature sensor (200a) is equal to or higher than the fourth temperature.

8. A method for thermally managing a battery (B) in a vehicle (1) that travels by supplying electric power of the battery (B) to a drive device (E), the method comprising:
determining a temperature of the battery (B) by means of a battery temperature sensor (100a);
determining whether the determined temperature of the battery (B) is equal to or lower than a first temperature;
heating a heating medium flowing through a first circuit (100) by means of an electric heater (101) in the first circuit (100), thereby performing temperature adjustment of the battery (B), when the determined temperature of the battery (B) is equal to or lower than the first temperature; and
subsequently, when the determined temperature of the battery (B) becomes higher than the first temperature, connecting the first circuit (100) and a second circuit (200) through which the heating medium flows and which performs temperature adjustment of the drive device (E), and heating the heating medium using waste heat of the drive device (E).

9. A method according to claim 8, further comprising:
providing a refrigerant circuit (20) including a compressor (21), an outdoor condenser (23) and a chiller expansion valve (24);
providing a chiller (30) connected between the chiller expansion valve (24) and the compressor (21);
allowing the heating medium to flow through a third circuit (300) configured to exchange heat with outside air and through a fourth circuit (400) connected to the chiller (30);
determining whether the determined temperature of the battery (B) is equal to or lower than a second temperature higher than the first temperature; and
when the temperature of the battery (B) is higher than the second temperature, connecting the first circuit (100), the second circuit (200), the third circuit (300) and the fourth circuit (400).

10. A method according to claim 9, **characterised by**:
determining whether the determined temperature of the battery (B) is equal to or higher than a third temperature higher than the second temperature; and
when the temperature of the battery (B) is higher than the second temperature and lower than the third temperature, connecting the second circuit (200) and the third circuit (300).

11. A method according to any one of the claims 8 to 10, **characterised by**:
supplying an alternating current from outside the vehicle (1) to a charging controller (C) included in the drive device (E) to charge the battery (B); and
executing the first heating control and the second heating control during charging of the battery (B).

12. A method according to any one of the claims 9 to 11, **characterised by**:
during the first heating control, connecting the first circuit (100) and the fourth circuit (400).

13. A method according to any one of the claims 9 to 12, **characterised by**:
during the second heating control, connecting the first circuit (100), the second circuit (200) and the third circuit (300).

14. A method according to any one of the claims 9 to 13, further comprising:
determining a temperature of the drive device (E) by means of a drive device temperature sensor (200a);
determining whether the determined temperature of the drive device (E) is equal to or higher than a fourth temperature higher than the third temperature; and
actuating an electric fan (303) configured to feed outside air to a radiator (301) when the determined temperature of the drive device (E) is equal to or higher than the fourth temperature.
